# EUROPÄISCHE PATENTSCHRIFT

(11) **EP 2 940 213 B1**
(45) Veröffentlichungstag und Bekanntmachung des Hinweises auf die Patenterteilung: **10.10.2018**
(21) Anmeldenummer: 15001086.6
(22) Anmeldetag: 15.04.2015
(51) Int. Cl.: E01C 19/35, A01D 34/82

(54) **SCHWINGUNGSENTKOPPELTE LENKDEICHSEL FÜR EIN ARBEITSGERÄT**
VIBRATION DECOUPLED GUIDANCE DRAWBAR FOR A WORK TOOL
ARBRE DE COMMANDE À OSCILLATIONS DÉCOUPLÉES POUR UN OUTIL DE TRAVAIL

(30) Priorität: 28.04.2014 DE 102014006256
(43) Veröffentlichungstag der Anmeldung: 04.11.2015
(73) Patentinhaber: Wacker Neuson Produktion GmbH & Co. KG, 80809 München (DE)
(72) Erfinder: Bartl, Andreas, 85457 Wörth (DE); Simon, Martin, 82024 Taufkirchen (DE); Prexler, Michael, 81245 München (DE); Müller, Tobias, 80687 München (DE)
(74) Vertreter: Müller Hoffmann & Partner

(56) Entgegenhaltungen:
- EP-A1- 0 662 371
- DE-A1-102004 015 588
- DE-A1-102006 059 774
- DE-C1- 10 007 869
- DE-T2- 69 916 413
- DE-U1- 8 423 337
- DE-U1-202009 004 301
- JP-A- 2013 170 393

## Beschreibung

Die Erfindung betrifft handgeführte Arbeitsgeräte gemäß den Oberbegriffen der Patentansprüche 1, 3 und 5. Die Arbeitsgeräte können beispielsweise als Arbeitsgerät zur Bodenverdichtung oder landwirtschaftliches Arbeitsgerät ausgestaltet sein, beispielsweise als Vibrationsplatte, Verdichtungswalze oder Mähgerät.
Bei der Bedienung und insbesondere beim Führen von Arbeitsgeräten an einer Führungsdeichsel können Schwingungen des Arbeitsgeräts die Hände bzw. Arme des führenden Bedieners belasten. Zum Schutz des Bedieners gibt es arbeitsrechtliche Normen, die für die Hand-Arm-Vibrationen Grenzwerte von beispielsweise 2,5 m/s² setzen. Bei darüber hinausgehenden Hand-Arm-Vibrationen werden zusätzliche Maßnahmen gefordert, wie beispielsweise eine Begrenzung und Dokumentation der Arbeitszeiten des Bedieners. Derartige Anforderungen existieren für verschiedenartige Arbeitsgeräte, insbesondere für Arbeitsgeräte zur Bodenverdichtung im Bauwesen, wie beispielsweise Vibrationsplatten und Verdichtungswalzen.
Aus der DE 699 16 413 T2 ist eine derartige Vibrationsplatte mit einem vibrationsgedämpften Handgriff bekannt. Die Vibrationsplatte weist einen durch Vibrationsdämpfer mit der Vibrationsplatte gekoppelten Deichselabschnitt auf, an dem eine Griffvorrichtung angeordnet ist.
Ähnliche Vibrationsplatten sind aus DE 10 2006 059 774 A1, DE 100 07 869 C1, DE 20 2009 004 301 U1 und EP 0662371 A1 bekannt. Auch die JP 2013 170393 A, DE 84 23 337 U1 und DE 10 2004 015588 A1 zeigen entsprechende Vibrationsplatten mit angekoppelter Deichsel.
Der Erfindung liegt die Aufgabe zugrunde, ein handgeführtes Arbeitsgerät anzugeben, das einerseits eine verbesserte Ergonomie und Bedienbarkeit und andererseits einen verbesserten Bedienerschutz aufweist.

Diese Aufgabe wird durch ein handgeführtes Arbeitsgerät gemäß den Patentansprüchen 1, 3 und 5 gelöst. Weiterentwicklungen sind den abhängigen Ansprüchen zu entnehmen.
Ein handgeführtes Arbeitsgerät weist eine Arbeitsvorrichtung und eine mit der Arbeitsvorrichtung gekoppelte Deichselvorrichtung zum Führen der Arbeitsvorrichtung auf. Die Deichselvorrichtung weist einen durch eine Vibrationsentkopplungsvorrichtung mit der Arbeitsvorrichtung gekoppelten Deichselabschnitt und eine an dem Deichselabschnitt angeordnete Griffvorrichtung mit einem ersten Griffbereich und einem zweiten Griffbereich auf. Der erste Griffbereich und der zweite Griffbereich sind derart angeordnet, dass eine durch die Gestaltung der Vibrationsentkopplungsvorrichtung bedingte Verwindungsachse des Deichselabschnitts relativ zur Arbeitsvorrichtung im Wesentlichen mittig zwischen dem ersten Griffbereich und dem zweiten Griffbereich verläuft.

Das handgeführte Arbeitsgerät kann ein beliebiges deichselgeführtes Arbeitsgerät sein, das ein Bedienen, beispielsweise Ziehen, Schieben, Lenken und Steuern einer Fortbewegung und/oder einer Arbeitsbewegung des Arbeitsgeräts durch einen Bediener anhand bzw. mit Hilfe der Deichselvorrichtung ermöglicht. Insbesondere kann es sich um ein Arbeitsgerät handeln, bei dem während des Arbeitsvorgangs starke Vibrationen auftreten, die über die Deichselvorrichtung in die Hände bzw. Arme des Bedieners eingeleitet werden könnten. Das handgeführte Arbeitsgerät kann beispielsweise eine deichselgeführte Vibrationsplatte, eine deichselgeführte Verdichtungswalze oder ein deichselgeführtes, landwirtschaftliches Bodenbearbeitungs- oder Mähgerät sein.
Die Arbeitsvorrichtung kann eine Werkzeugvorrichtung wie beispielsweise eine Bodenkontaktplatte zur Bodenverdichtung, eine Walzenvorrichtung oder ein Mähwerk aufweisen. Weiterhin kann sie eine Antriebsvorrichtung wie beispielsweise einen Elektro- und/oder Kraftstoffmotor aufweisen, der eine Arbeitsbewegung der Werkzeugvorrichtung und/oder eine Fortbewegung des Arbeitsgeräts erzeugen kann. Beispielsweise kann der Antrieb eine die Bodenkontaktplatte aufweisende und mit einer Obermasse elastisch gekoppelte Untermasse der Arbeitsvorrichtung relativ zur Obermasse in Schwingung versetzen und somit sowohl die Arbeitsbewegung der Bodenkontaktplatte als auch die Fortbewegung des Arbeitsgeräts erzeugen. Hierbei können starke Vibrationen auftreten, so dass der Antrieb als Vibrationserreger betrachtet werden kann.
Zum Führen der Arbeitsvorrichtung weist das Arbeitsgerät eine Deichselvorrichtung auf. Diese weist einen durch eine Vibrationsentkopplungsvorrichtung mit der Arbeitsvorrichtung gekoppelten Deichselabschnitt auf. Der Deichselabschnitt ist länglich ausgeführt, wodurch sich eine im Wesentlichen längliche Deichselstruktur ergeben kann, die wahlweise ein Ziehen oder Schieben des Arbeitsgeräts an der Deichselvorrichtung ermöglicht.

Die Vibrationsentkopplungsvorrichtung bewirkt eine möglichst schwingungsentkoppelnde Ankopplung des Deichselabschnitts an die Arbeitsvorrichtung. Hierdurch wird der Deichselabschnitt von den Vibrationen der Arbeitsvorrichtung entkoppelt. Die an der Arbeitsvorrichtung erzeugten Schwingungen und Vibrationen können folglich durch die Vibrationsentkopplungsvorrichtung gedämpft und die Hände und Arme des Bedieners geschützt werden.

Die Vibrationsentkopplungsvorrichtung weist elastische Verbindungselemente wie zum Beispiel Gummipuffer auf, die zwischen der Arbeitsvorrichtung und dem Deichselabschnitt angeordnet sind. Alternativ oder zusätzlich können weitere Vibrationsentkopplungselemente wie beispielsweise Feder-Dämpfer-Einrichtungen vorgesehen und zwischen Arbeitsvorrichtung und Deichselabschnitt angeordnet
Durch die Vibrationsentkopplungsvorrichtung wird eine elastische Verbindung zwischen Arbeitsvorrichtung und Deichselabschnitt erreicht, die einerseits Grundlage für die Vibrationsentkopplung ist und andererseits ein gewisses Spiel und damit Verwindungen des Deichselabschnitts relativ zur Arbeitsvorrichtung zulässt. Die Verwindungsachse erstreckt sich längs zur Deichselvorrichtung bzw. zum Deichselabschnitt. Die an dem Deichselabschnitt angeordnete Griffvorrichtung weist den ersten und zweiten Griffbereich jeweils zum Anlegen einer ersten bzw. zweiten Hand des Bedieners auf und ermöglicht so dem Bediener ein komfortables und effektives beidhändiges Greifen und damit Bedienen bzw. Führen des Arbeitsgeräts.
Hierbei sind der erste und zweite Griffbereich derart angeordnet, dass die Verwindungsachse der Vibrationsentkopplungsvorrichtung im Wesentlichen mittig zwischen dem ersten und zweiten Griffbereich und damit mittig zwischen den beiden Händen des führenden Bedieners verläuft. Insbesondere können die erste und zweite Griffvorrichtung in jeweils gleichem Abstand aus Sicht des Bedieners links bzw. rechts von der Verwindungsachse bzw. links und rechts einer gedachten Verlängerung der Verwindungsachse in Richtung des Bedieners angeordnet sein. Anders ausgedrückt, kann eine gedachte lineare Verbindungslinie der jeweiligen mittleren Angriffspunkte der Griffbereiche, an denen bei normaler Bedienung die Mittelpunkte der jeweiligen Handfläche des Bedieners zu liegen kommt, durch die Verwindungsachse verlaufen und durch diese in zwei im Wesentlichen gleichlange Teilabschnitte geteilt werden.
In Folge dieser Anordnung kommen in der vorgesehenen Bedienhaltung die Hände des führenden Bedieners seitlich links und rechts neben der Verwindungsachse zu liegen, und die Verwindungsachse führt mittig zwischen den angreifenden Händen hindurch. Lenkbewegungen des Benutzers werden dadurch ermöglicht und gleichzeitig effektiv über die Deichsel auf das Arbeitsgerät übertragen. Dabei wird ein langer Hebelarm zwischen dem Angriffspunkt des Benutzers bzw. dem Zentrum seiner Lenkbewegung und der Verwindungsachse vermieden. Ein derartiger Hebelarm würde zu starken Verwindungen zwischen Deichselabschnitt und Arbeitsvorrichtung und gleichzeitig zu einer schlechten Führbarkeit des Arbeitsgeräts führen.
Dies ermöglicht ein effektives Steuern des handgeführten Arbeitsgeräts bei gleichzeitig möglichst niedriger Einleitung von Hand-Arm-Vibrationen. Folglich kann der Bediener das Arbeitsgerät exakt führen, während er nur sehr geringen Hand-Arm-Vibrationen ausgesetzt ist.
In einer Ausführungsform kann die Deichselvorrichtung einen unteren Deichselteil aufweisen, der mit der Arbeitsvorrichtung gekoppelt sein kann. Eine derartige Verbindung kann weitgehend vibrationsstarr gestaltet sein. Sie kann im Wesentlichen starr oder alternativ beweglich, beispielsweise mittels einer Gelenk- oder Scharnierverbindung ausgeführt sein. Am unteren Deichselteil, beispielsweise an einem von der Arbeitsvorrichtung abgewandten Ende des unteren Deichselteils, kann der Deichselabschnitt über die Vibrationsentkopplungsvorrichtung angeordnet sein kann.

Erfindungsgemäß weist der Deichselabschnitt einen an der Vibrationsentkopplungsvorrichtung angeordneten ersten Längsabschnitt und einen an einem der Vibrationsentkopplungsvorrichtung gegenüberliegenden Ende des ersten Längsabschnitts angeordneten zweiten Längsabschnitt auf, wobei am zweiten Längsabschnitt die Griffvorrichtung angeordnet ist. Diese Längsabschnitte können starr miteinander verbunden sein.
Die zweiteilige Ausführung des Deichselabschnitts ermöglicht verschiedene konstruktive Ausgestaltungen und Formen der Anordnung des ersten und zweiten Griffbereichs seitlich neben der Verwindungsachse.

Gemäß einer 1. Variante der Erfindung erstreckt der zweite Längsabschnitt sich relativ zum ersten Längsabschnitt, bezogen auf eine Gebrauchsstellung der Deichselvorrichtung, nach unten abgewinkelt. Vorzugsweise ist ein Winkel zwischen einer Mittelachse des ersten Längsabschnitts und einer Mittelachse des zweiten Längsabschnitts kleiner oder gleich 170°, beispielsweise auch kleiner als 150°.
Die abgewinkelte Anordnung des zweiten Längsabschnitts ermöglicht es, die Griffvorrichtung nach Art eines Führungsbügels oberhalb des nach unten abgewinkelten zweiten Längsabschnitts anzuordnen, so dass diese für den Bediener gut zugänglich ist.

Beispielsweise kann die Griffvorrichtung als Führungsbügel einen mit dem zweiten Längsabschnitt gekoppelten unteren Querholm und zwei aus Sicht des Bedieners links und rechts am unteren Querholm angesetzte, sich im Wesentlichen nach oben erstreckende Längsholmen aufweisen, wobei die Längsholme die Griffbereiche aufweisen. Optional kann die Griffvorrichtung einen zusätzlichen, beispielsweise die Längsholme oben verbindenden oberen Querholm aufweisen und somit als geschlossener Bügel gestaltet sein. An die seitlichen Längsholme kann der Benutzer seine Hände wie an ein Lenkrad anlegen.
Wegen des nach unten abgewinkelten zweiten Längsabschnitts kommen die Hände dabei seitlich neben der Verwindungsachse zu liegen, so dass die Verbindungsachse mittig zwischen dem ersten und dem zweiten Griffbereich der Griffvorrichtung verlaufen und der Bediener die Fortbewegung des Arbeitsgeräts durch direkte Lenkbewegungen (Zug- und Druckbewegungen) effektiv steuern kann. Gleichzeitig reduziert die Vibrationsentkopplungsvorrichtung die Einleitung von Hand-Arm-Vibrationen.

Gemäß einer 2. Variante der Erfindung erstreckt sich der zweite Längsabschnitt relativ zum ersten Längsabschnitt axial versetzt. In einer weiteren Ausführungsform kompensiert ein axialer Versatz des zweiten Längsabschnitts relativ zu dem ersten Längsabschnitt im Wesentlichen einen Versatz des ersten Griffbereichs und des zweiten Griffbereichs relativ zu einem Anordnungsbereich der Griffvorrichtung, in dem die Griffvorrichtung mit dem zweiten Längsabschnitt gekoppelt ist. Insbesondere kann der zweite Längsabschnitt axial nach unten versetzt sein, die Griffvorrichtung kann sich vom Anordnungsbereich aus nach oben erstrecken.
Der axiale Versatz zwischen dem ersten und zweiten Längsabschnitt kann beispielsweise durch ein mit dem ersten und dem zweiten Längsabschnitt beispielsweise starr verbundenes Versatzbauteil erreicht werden.
Durch den axialen Versatz ist es möglich, die Griffvorrichtung (beispielsweise in Form des oben beschriebenen Führungsbügels) an dem zweiten Längsabschnitt derart anzukoppeln, dass sicher gestellt ist, dass die Griffbereiche seitlich neben der Verwindungsachse angeordnet sind. Insbesondere können die Längsholme des Führungsbügels seitlich neben der Verwindungsachse angeordnet sein.

Folglich kann eine Lenkbewegung direkt und effektiv auf das handgeführte Arbeitsgerät übertragen werden. Ein verlängerter Hebelarm mit negativer Beeinflussung des Lenkverhaltens wird vermieden.

Gemäß einer 3. Variante der Erfindung ist die Vibrationsentkopplungsvorrichtung derart gestaltet und/oder angeordnet, dass die Verwindungsachse nicht parallel zu einer Längsachse des Deichselabschnitts verläuft. Insbesondere kann die Verwindungsachse schräg zur Längsachse des Deichselabschnitts verlaufen und beispielsweise 15° oder 30° steiler als die Längsachse des Deichselabschnitts zum Bediener hin ansteigen.
Eine derartige Anordnung ermöglicht es, die Griffvorrichtung an dem Deichselabschnitt beispielsweise nach Art eines nach oben ausgerichteten Führungsbügels anzuordnen und dabei sicherzustellen, dass sowohl der erste als auch der zweite Griffbereich seitlich neben der bezüglich der Längsachse des Deichselabschnitts schräg angeordneten Verwindungsachse zu liegen kommt. Folglich wird bei einfacher Konstruktion und effektiver Vibrationsdämpfung eine gute Lenkbarkeit gewährleistet.
In einer Variante dieser Ausführungsform kann die Vibrationsentkopplungsvorrichtung wenigstens zwei Vibrationsentkopplungselemente aufweisen. Die Vibrationsentkopplungselemente können an verschiedenen Punkten entlang der Verwindungsachse angeordnet sein.
Durch die Anordnung der Vibrationsentkopplungselemente kann der Verlauf der Verwindungsachse beeinflusst bzw. festgelegt werden. Werden die Vibrationsentkopplungselemente schräg zur Längsachse des Deichselabschnitts angeordnet, so kann - je nach Art der Vibrationsentkopplungselemente - auch die Verwindungsachse ebenfalls schräg zur Längsachse des Deichselabschnitts verlaufen.
Der Abstand der entlang der Längsachse des Deichselabschnitts bzw. der Verwindungsachse angeordneten Vibrationsentkopplungselemente kann in einem Bereich von 20 % bis 40 % der wirksamen Deichsellänge liegen. Dabei wird als wirksame Deichsellänge die Länge zwischen der Anbindung der Deichselvorrichtung an der Arbeitsvorrichtung und der Anbindung der Griffvorrichtung an der Deichselvorrichtung verstanden.
Die Vibrationsentkopplungselemente können Gummipuffer oder Feder-Dämpfer-Elemente aufweisen.

In einer weiteren Variante dieser Ausführungsform können beispielsweise der untere Deichselteil und der Deichselabschnitt mit übereinstimmender Längsachse angeordnet sein, wobei die Verwindungsachse schräg dazu verläuft.

Die Gestaltung der Vibrationsentkopplungsvorrichtung mit schräg zur Längsachse der Deichselvorrichtung bzw. schräg zur Längsachse des Deichselabschnitts verlaufender Verwindungsachse ermöglicht eine einfache und kostengünstige Vibrationsdämpfung bei gleichzeitiger Gewährleistung einer guten Lenkbarkeit, da der Hebelarm bei der Einleitung der Lenkbewegungen vermieden wird.

In den genannten Ausführungsformen kann die Griffvorrichtung als beispielsweise nach oben aufragender Griffbügel ausgebildet sein, der beispielsweise drehbar am Deichselabschnitt angeordnet ist. Alternativ oder zusätzlich kann durch ein Drehen der Griffvorrichtung eine Geschwindigkeit und/oder eine Bewegungsrichtung der Arbeitsvorrichtung wählbar sein.

Insbesondere kann durch die Art der Anordnung der Griffvorrichtung an dem Deichselabschnitt eine Drehrichtung der Griffvorrichtung im Wesentlichen senkrecht zur Längsachse der Deichselvorrichtung und/oder senkrecht zur Verwindungsachse festgelegt sein. Der Bediener kann beispielsweise durch Verschieben des Griffbügels nach vorne bzw. nach hinten mit unterschiedlicher Auslenkung die Fahrtrichtung und/oder Geschwindigkeit des Arbeitsgeräts steuern.

Beispielsweise kann in einer senkrechten Position des Griffbügels das Arbeitsgerät im Stand, also im Wesentlichen auf der Stelle arbeiten. Wird der Hebel nach vorne bewegt, setzt sich das Arbeitsgerät ebenfalls nach vorne in Bewegung. Bei Bewegung des Hebels nach hinten bewegt sich das Arbeitsgerät rückwärts. Abhängig vom Grad der Auslenkung des Griffbügels kann die Fortbewegungsgeschwindigkeit eingestellt werden.

Das seitliche Drehen bzw. Drücken des Griffbügels durch den Bediener kann in den oben beschriebenen Ausführungsformen als Lenkbewegung ausgelegt und effektiv über die Deichselvorrichtung auf die Arbeitsvorrichtung übertragen werden. So kann die Arbeitsvorrichtung z.B. um ihre Hochachse verdreht werden.

Die genannten Ausführungsformen ermöglichen eine Vibrationsentkopplung der Deichsel bei gleichzeitig effektiver Führ- bzw. Lenkbarkeit des Arbeitsgeräts, da ein verkürzter Hebelarm zwischen der Drehachse der Deichsel und dem Angriffspunkt des Bedieners erreicht wird bzw. ein Hebelarm zwischen einer Mittelachse der Lenkbewegung und der Verwindungsachse ganz vermieden wird. Eine gute Steuerbarkeit des Arbeitsgeräts kann dadurch gewährleistet werden.

Gleichzeitig wird der Bediener geschont, da Vibrationen der Arbeitsvorrichtung nur gedämpft in die Deichselvorrichtung, insbesondere die Griffvorrichtung eingeleitet werden. Davon profitiert sowohl der Arbeitgeber, für den die Dokumentationspflicht der Arbeitszeiten entfällt, als auch der Arbeiter, der nur geringen Hand-Arm-Vibrationen ausgesetzt ist und dennoch das Arbeitsgerät exakt führen kann.

Diese und weitere Merkmale der Erfindung werden nachfolgend anhand von Beispielen unter Zuhilfenahme der begleitenden Figuren näher erläutert. Es zeigen:
- **Fig. 1**: eine Vibrationsplatte mit abgewinkeltem Längsabschnitt des Deichselteils zur Anordnung eines Griffbügels in einer Seitenansicht;
- **Fig. 2**: die Vibrationsplatte aus Fig. 1 in einer Draufsicht;
- **Fig. 3**: eine Vibrationsplatte mit axial versetztem Längsabschnitt zur Anordnung des Führungsbügels; und
- **Fig. 4**: eine Vibrationsplatte mit schräger Anordnung einer aus wenigstens zwei Vibrationsentkopplungselementen bestehenden Vibrationsentkopplungsvorrichtung schräg zu einer Längsachse der Deichsel.

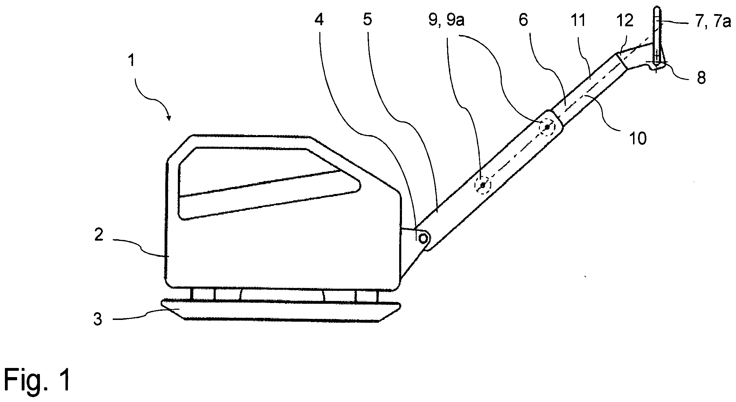

Fig. 1 zeigt schematisch in einer Seitenansicht eine als Bodenverdichtungsvorrichtung dienende Vibrationsplatte 1, die eine Obermasse 2 mit darin angeordnetem Antriebsmotor und eine mit der Obermasse federnd gekoppelte Untermasse mit einer Bodenkontaktplatte 3 aufweist. Diese Elemente der Vibrationsplatte 1 bilden eine Arbeitsvorrichtung. Die Arbeitsvorrichtung ist über eine Deichselvorrichtung führ- und steuerbar.

Die Deichselvorrichtung ist über einen Deichselbock 4 beispielsweise im Wesentlichen vibrationsstarr mit der Obermasse 2 der Arbeitsvorrichtung verbunden. Sie weist ein an dem Deichselbock 4 angesetztes bzw. mit diesem beweglich verbundenes unteres Deichselteil 5 und ein mit dem unteren Deichselteil 5 verbundenes oberes Deichselteil 6 auf. An dem oberen Deichselteil 6 ist ein als Führungsbügel dienender Griffbügel 7 angeordnet. Der Griffbügel 7 erstreckt sich ausgehend von seiner Ankopplung am oberen Deichselteil 6 nach oben und kann schwenkbar bzw. drehbar um eine Drehachse 8 sein.

Die so gestaltete Deichselvorrichtung ermöglicht es dem Bediener, die Vibrationsplatte 1 zu bedienen und sowohl ihre Arbeitsbewegung als auch ihre Fortbewegung am Griffbügel 7 zu steuern. Beispielsweise kann der Bediener durch Verschieben/Verschwenken des Griffbügels 7 nach vorne bzw. nach hinten mit unterschiedlicher Auslenkung die Fahrtrichtung und/oder die Stampfbewegung des Arbeitsgeräts steuern. Durch das Verschwenken des Griffbügels 7 wird z.B. eine an der Vibrationsplatte 1 vorgesehene Hydraulikeinrichtung angesteuert, die ihrerseits wiederum eine an der Untermasse der Vibrationsplatte 1 angeordnete Unwuchterregereinrichtung ansteuert. Der Aufbau und die Funktionsweise derartiger Unwuchterreger bei Vibrationsplatten ist bekannt, so dass sich an dieser Stelle eine eingehendere Beschreibung erübrigt. Der Unwuchterreger erzeugt eine resultierende, oszillierende Kraft, mit der einerseits eine Verdichtungswirkung und andererseits ein Vortrieb (Vorwärts- und Rückwärtsfahrt) der Vibrationsplatte 1 erzeugt werden kann.

Z.B. kann bei einer senkrechten Position des Griffbügels 7 die Vibrationsplatte 1 bzw. der Unwuchterreger im Stand, also im Wesentlichen auf der Stelle arbeiten. Wird der Hebel in einer Richtung bewegt, setzt sich die Vibrationsplatte 1 ebenfalls in dieser Richtung in Bewegung. Abhängig vom Grad der Auslenkung des Griffbügels, beispielsweise in Bezug auf die in Fig. 1 gezeigte neutrale Position, kann die Fortbewegungsgeschwindigkeit eingestellt werden.

Diese Ausgestaltung der Steuerungsmöglichkeiten ist lediglich als Beispiel zu verstehen. Andere Steuerungsmöglichkeiten, wie beispielsweise eine Steuerung der Bewegungsrichtung über einen separaten Hebel, Drehknopf, Schieber oder Schalter bei gleichzeitig starrer Anordnung des Führungsbügels 7 am oberen Deichselteil 6 sind ebenfalls möglich.

Um die durch die Vibrationsplatte 1 erzeugten Schwingungen und die im Arbeitsbetrieb erzeugten Vibrationen zu dämpfen, ist zwischen dem unteren Deichselteil 5 und dem oberen Deichselteil 6 eine Vibrationsentkopplungsvorrichtung 9 vorgesehen, die beispielsweise zwei oder mehr Vibrationsentkopplungselemente 9a in Form von Gummipuffern und/oder Feder-Dämpfer-Elementen aufweisen kann. Durch diese weiche, vibrationsdämpfende bzw. -entkoppelnde Ankopplung des oberen Deichselteils 6 an das untere Deichselteil 5 werden die im Arbeitsbetrieb an der Arbeitsvorrichtung erzeugten Vibrationen gedämpft und von den Händen des am Griffbügel führenden Bedieners im Wesentlichen fern gehalten.

Allerdings entsteht durch die im Verhältnis zu einer starren Ankopplung weiche Ankopplung ein gewisses Spiel zwischen dem unteren und dem oberen Deichselteil 5, 6 und damit die Möglichkeit der Verwindung der beiden Deichselteile 5, 6 relativ zueinander. Je nach Art der Vibrationsentkopplungsvorrichtung 9 entsteht eine Verwindungsachse 10, die sich beispielsweise in Längsrichtung wenigstens eines der Deichselteile 5, 6 erstrecken kann. Dabei kann sich also das obere Deichselteil 6 um die Verwindungsachse 10 relativ zu dem an der Vibrationsplatte 1 in Bezug auf die Verwindungsachse 10 starr gehaltenen unteren Deichselteil 5 verdrehen.

In der in Fig. 1 gezeigten Ausführungsform weist das obere Deichselteil 6 eine Gestaltung mit zwei aneinander stirnseitig angrenzenden, starr gekoppelten Längsabschnitten 11 und 12 auf. Der obere, zweite Längsabschnitt 12 ist als geneigter Deichselkopf ausgebildet. Er erstreckt abgewinkelt und insbesondere nach unten geneigt. Hierdurch kann der Griffbügel 7 derart angeordnet werden, dass die Verwindungsachse 10 bzw. ihre gedachte Verlängerung in Richtung des am Griffbügel 7 angreifenden Bedieners mittig zwischen einem ersten Griffbereich 7a und einem zweiten Griffbereich 7b des Griffbügels 7 und damit mittig zwischen den angreifenden Händen des Bedieners verläuft. Der erste Griffbereich 7a kann dabei z.B. durch die linke Hand des Bedieners gehalten werden, während die rechte Hand des Bedieners den zweiten Griffbereich 7b umgreift.

Folglich kann der Bediener durch seitliches Drücken oder Ziehen des Griffbügels eine Lenkbewegung in die Deichselvorrichtung einleiten, die ein Lenken der Fortbewegung der Vibrationsplatte 1 ermöglicht. Dabei wird ein langer Hebelarm zwischen dem Ansatzpunkt des Bedieners am Griffbügel 7, nämlich den Griffbereichen 7a, 7b, und der Verwindungsachse 10 vermieden, der zu starken Verwindungen entlang der Achse führen könnte und dadurch die Führung der Vibrationsplatte 1 indirekt und "schwammig" machen würde. Folglich kann die Lenkbewegung des Bedieners effektiv und direkt über die Deichselvorrichtung auf die Vibrationsplatte 1 übertragen werden.

Der gezeigte Aufbau der Deichselvorrichtung ermöglicht es, mittels der Vibrationsentkopplungsvorrichtung 9 einerseits den Griffbügel 7 von schädlichen Vibrationen der Vibrationsplatte 1 zu entkoppeln. Andererseits können intuitive Lenkbewegung des Bedieners am Griffbügel 7 effektiv auf die Vibrationsplatte 1 übertragen werden, so dass diese intuitiv lenkbar und exakt führbar ist.

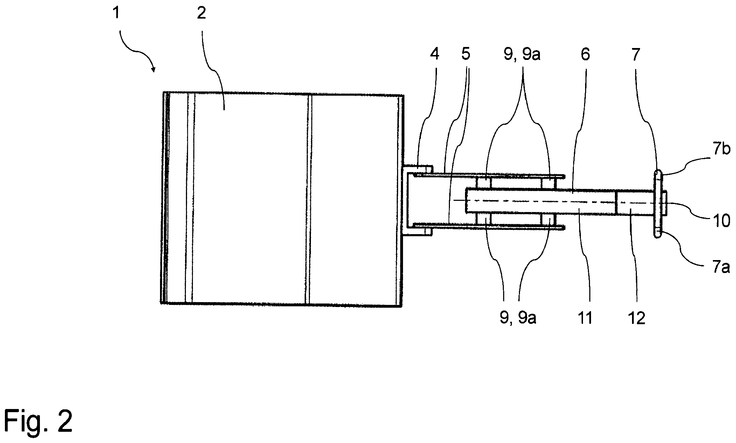

Fig. 2 zeigt die Ausführungsform aus Fig. 1 in einer Draufsicht, in der die konstruktive Gestaltung insbesondere der Deichselvorrichtung deutlich wird. Von der Vibrationsplatte 1 ist die Obermasse 2 gezeigt, an der sich der Deichselbock 4 mit Aufnahme des unteren Deichselteils 5 anschließt. Zwischen zwei Seitenteilen des unteren Deichselteils 5 ist das obere Deichselteil 6 angeordnet und an dem unteren Deichselteil 5 über eine Mehrzahl von Vibrationsentkopplungselementen 9a, zum Beispiel Gummipuffern, der Vibrationsentkopplungsvorrichtung angekoppelt.

Durch die weiche Kopplung des oberen Deichselteils 6 an das untere Deichselteil 5 ergeben sich Freiheitsgrade bei der relativen Bewegbarkeit, die zu Verwindungen entlang der Verwindungsachse 10 führen können. Wie in Fig. 2 gezeigt, ist das obere Deichselteil 6 zweiteilig mit einem unteren Längsabschnitt 11 und einem starr mit dem unteren Längsabschnitt 11 verbundenen oberen Längsabschnitt 12 ausgebildet, wobei der obere Längsabschnitt 12 als geneigter Deichselkopf ausgeführt ist. An dem geneigten Deichselkopf 12 ist der Griffbügel 7 derart angeordnet, dass zwischen den seitlichen Griffbereichen 7a, 7b des Griffbügels 7 mittig die Verwindungsachse 10 verläuft. Dies ermöglicht eine intuitive Lenkbarkeit bei gleichzeitig effektiver Begrenzung der Hand-Arm-Vibrationen.

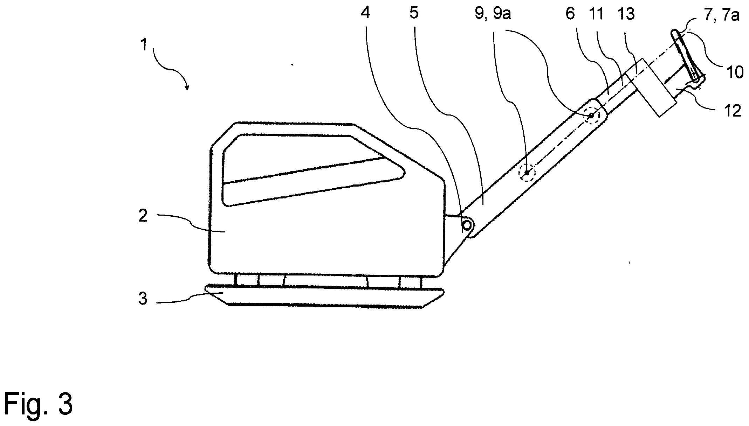

Die in Fig. 3 gezeigte Ausführungsform der Vibrationsplatte 1 entspricht in weiten Teilen konstruktiv der in Fig. 1 gezeigten. Allerdings weist das obere Deichselteil 6 in dieser Ausführungsform einen axialen Versatz zwischen dem ersten Längsabschnitt 11 und dem zweiten Längsabschnitt 12 auf, an welchem der Griffbügel 7 angeordnet ist. Der axiale Versatz wird in dieser Ausführungsform durch ein Versatzbauteil 13 erreicht, welches jeweils starr mit dem ersten und zweiten Längsabschnitt 11, 12 verbunden ist.

Durch den axialen Versatz ist sichergestellt, dass die Griffbereiche 7a, 7b des Griffbügels 7 seitlich neben der Verwindungsachse 10 angeordnet sind, so dass eine intuitive Lenkbewegung bei gleichzeitig effektiver Vibrationsentkopplung erreicht werden kann. Die Vibrationsplatte 1 ist daher einerseits exakt führbar und schont andererseits die Hände und Arme des Bedieners vor schädlichen Vibrationen.

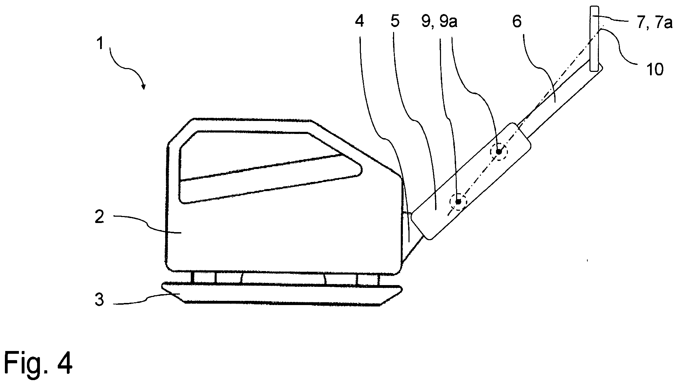

In der in Fig. 4 gezeigten Ausführungsform der Vibrationsplatte 1 sind die Vibrationsentkopplungselemente 9a der Vibrationsentkopplungsvorrichtung 9 derart zwischen dem unteren Deichselteil 5 und dem oberen Deichselteil 6 angeordnet, dass die sich aus den Freiheitsgraden der Bewegung zwischen dem unteren und oberem Deichselteil 5, 6 ergebende relative Verwindungsachse 10 nicht parallel zu einer Längsachse des unteren und/oder oberen Deichselteil 5, 6 verläuft. Der untere Deichselteil 5 und der obere Deichselteil 6 weisen - wie in den Figuren gezeigt - eine längliche Erstreckung auf, die deren Längsachse definieren. In der gezeigten Ausführungsform verläuft die Verwindungsachse 10 schräg zu den Längsachsen des unteren und oberen Deichselteils 5, 6, wie in Fig. 4 gut erkennbar.

In dieser Ausführungsform ist es möglich, den Griffbügel 7 beispielsweise direkt an dem einstückig und gerade ausgebildetem Deichselteil 6 anzuordnen. Dennoch kommen wegen des schrägen Verlaufs der Verwindungsachse 10 die Griffbereiche 7a, 7b des Griffbügels 7 seitlich neben der Verwindungsachse 10 zu liegen.

Hierdurch wird ein Hebelarm zwischen dem Angriffspunkt des Bedieners und der Verwindungsachse 10 vermieden und ein intuitives Lenkverhalten bei gleichzeitiger Vibrationsentkopplung erreicht. Gleichzeitig ist die Gestaltung des oberen Deichselteils 6 kostengünstig und robust.

Bei allen Ausführungsformen ist es möglich, mehrere Vibrationsentkopplungselemente 9a entlang der Verwindungsachse 10 anzuordnen. Der Abstand der entlang der Längsachse der Deichselteile 5, 6 bzw. der Verwindungsachse 10 angeordneten Vibrationsentkopplungselemente 9a kann in einem Bereich von 20 % bis 40 % der wirksamen Deichsellänge liegen. Dabei wird als wirksame Deichsellänge die Länge zwischen der Anbindung der Deichselvorrichtung an der Arbeitsvorrichtung (hier z.B. der Anbindung des unteren Deichselteils 5 an dem Deichselbock 4) und der Anbindung des Griffbügels 7 an der Deichselvorrichtung (hier: an dem oberen Deichselteil 6) verstanden.

Die gezeigten Ausgestaltungen der deichselgeführten Vibrationsplatte 1 können analog auch auf weitere deichselgeführte Arbeitsgeräte übertragen werden. Sie ermöglichen und unterstützen ein intuitives Lenkverhalten bei exakter Führ- und Steuerbarkeit des Arbeitsgeräts, und schützen gleichzeitig die Hände und Arme des Bedieners vor schädlichen Vibrationen.

## Patentansprüche

1. Handgeführtes Arbeitsgerät, mit
- einer Arbeitsvorrichtung (1); und
- einer mit der Arbeitsvorrichtung (1) gekoppelten Deichselvorrichtung zum Führen der Arbeitsvorrichtung (1), mit
+ einem durch eine Vibrationsentkopplungsvorrichtung (9) mit der Arbeitsvorrichtung (1) gekoppelten Deichselabschnitt (6), wobei die Vibrationsentkopplungsvorrichtung (9) eine elastische Verbindung zwischen der Arbeitsvorrichtung (1) und dem Deichselabschnitt (6) bewirkt; und
+ einer an dem Deichselabschnitt (6) angeordneten Griffvorrichtung (7) mit einem ersten Griffbereich (7a) und einem zweiten Griffbereich (7b), wobei der erste Griffbereich (7a) und der zweite Griffbereich (7b) derart angeordnet sind, dass eine durch die Vibrationsentkopplungsvorrichtung (9) aufgrund der elastischen Verbindung bedingte Verwindungsachse (10) des Deichselabschnitts (6) relativ zur Arbeitsvorrichtung (1) im Wesentlichen mittig zwischen dem ersten Griffbereich (7a) und dem zweiten Griffbereich (7b) verläuft;
wobei
- der Deichselabschnitt (6) eine längliche Erstreckung aufweist,
- sich die Verwindungsachse (10) längs zum Deichselabschnitt (6) erstreckt,
- die Griffbereiche (7a, 7b) seitlich neben der Verwindungsachse (10) angeordnet sind;
- der Deichselabschnitt (6) einen an der Vibrationsentkopplungsvorrichtung (9) angeordneten ersten Längsabschnitt (11) und einen an einem der Vibrationsentkopplungsvorrichtung (9) gegenüberliegenden Ende des ersten Längsabschnitts (11) angeordneten zweiten Längsabschnitt (12) aufweist, an dem die Griffvorrichtung (7) angeordnet ist; **dadurch gekennzeichnet, dass**
- der zweite Längsabschnitt (12) sich relativ zum ersten Längsabschnitt (11), bezogen auf eine Gebrauchsstellung der Deichselvorrichtung, nach unten abgewinkelt erstreckt.

2. Handgeführtes Arbeitsgerät nach Anspruch 1, wobei ein Winkel zwischen einer Mittelachse des ersten Längsabschnitts (11) und einer Mittelachse des zweiten Längsabschnitts (12) kleiner oder gleich 170° ist.

3. Handgeführtes Arbeitsgerät, mit
- einer Arbeitsvorrichtung (1); und
- einer mit der Arbeitsvorrichtung (1) gekoppelten Deichselvorrichtung zum Führen der Arbeitsvorrichtung (1), mit
+ einem durch eine Vibrationsentkopplungsvorrichtung (9) mit der Arbeitsvorrichtung (1) gekoppelten Deichselabschnitt (6), wobei die Vibrationsentkopplungsvorrichtung (9) eine elastische Verbindung zwischen der Arbeitsvorrichtung (1) und dem Deichselabschnitt (6) bewirkt; und
+ einer an dem Deichselabschnitt (6) angeordneten Griffvorrichtung (7) mit einem ersten Griffbereich (7a) und einem zweiten Griffbereich (7b), wobei der erste Griffbereich (7a) und der zweite Griffbereich (7b) derart angeordnet sind, dass eine durch die Vibrationsentkopplungsvorrichtung (9) aufgrund der elastischen Verbindung bedingte Verwindungsachse (10) des Deichselabschnitts (6) relativ zur Arbeitsvorrichtung (1) im Wesentlichen mittig zwischen dem ersten Griffbereich (7a) und dem zweiten Griffbereich (7b) verläuft;
wobei
- der Deichselabschnitt (6) eine längliche Erstreckung aufweist,
- sich die Verwindungsachse (10) längs zum Deichselabschnitt (6) erstreckt,
- die Griffbereiche (7a, 7b) seitlich neben der Verwindungsachse (10) angeordnet sind;
- der Deichselabschnitt (6) einen an der Vibrationsentkopplungsvorrichtung (9) angeordneten ersten Längsabschnitt (11) und einen an einem der Vibrationsentkopplungsvorrichtung (9) gegenüberliegenden Ende des ersten Längsabschnitts (11) angeordneten zweiten Längsabschnitt (12) aufweist, an dem die Griffvorrichtung (7) angeordnet ist; **dadurch gekennzeichnet, dass**
- der zweite Längsabschnitt (12) sich relativ zum ersten Längsabschnitt (11) axial versetzt erstreckt.

4. Handgeführtes Arbeitsgerät nach Anspruch 3, wobei
- ein axialer Versatz des zweiten Längsabschnitts (12) relativ zu dem ersten Längsabschnitt (11) im Wesentlichen einen Versatz des ersten Griffbereichs (7a) und - des zweiten Griffbereichs (7b) relativ zu einem Anordnungsbereich (8) der Griffvorrichtung (7), in dem die Griffvorrichtung (7) mit dem zweiten Längsabschnitt (12) gekoppelt ist, derart kompensiert, dass der erste Griffbereich (7a) und der zweite Griffbereich (7b) seitlich neben der Verwindungsachse (10) angeordnet sind.

5. Handgeführtes Arbeitsgerät, mit
- einer Arbeitsvorrichtung (1); und
- einer mit der Arbeitsvorrichtung (1) gekoppelten Deichselvorrichtung zum Führen der Arbeitsvorrichtung (1), mit
+ einem durch eine Vibrationsentkopplungsvorrichtung (9) mit der Arbeitsvorrichtung (1) gekoppelten Deichselabschnitt (6), wobei die Vibrationsentkopplungsvorrichtung (9) eine elastische Verbindung zwischen der Arbeitsvorrichtung (1) und dem Deichselabschnitt (6) bewirkt; und
+ einer an dem Deichselabschnitt (6) angeordneten Griffvorrichtung (7) mit einem ersten Griffbereich (7a) und einem zweiten Griffbereich (7b), wobei der erste Griffbereich (7a) und der zweite Griffbereich (7b) derart angeordnet sind, dass eine durch die Vibrationsentkopplungsvorrichtung (9) aufgrund der elastischen Verbindung bedingte Verwindungsachse (10) des Deichselabschnitts (6) relativ zur Arbeitsvorrichtung (1) im Wesentlichen mittig zwischen dem ersten Griffbereich (7a) und dem zweiten Griffbereich (7b) verläuft;
wobei
- der Deichselabschnitt (6) eine längliche Erstreckung aufweist,
- sich die Verwindungsachse (10) längs zum Deichselabschnitt (6) erstreckt,
- die Griffbereiche (7a, 7b) seitlich neben der Verwindungsachse (10) angeordnet sind; **dadurch gekennzeichnet, dass**
- die Vibrationsentkopplungsvorrichtung (9) derart gestaltet und/oder angeordnet ist, dass die Verwindungsachse (10) nicht parallel zu einer Längsachse des Deichselabschnitts (6) verläuft.

6. Handgeführtes Arbeitsgerät nach einem der vorstehenden Ansprüche, wobei
- die Vibrationsentkopplungsvorrichtung (9) wenigstens zwei Vibrationsentkopplungselemente (9a) aufweist, wobei die Vibrationsentkopplungselemente (9a) an verschiedenen Punkten entlang der Verwindungsachse (10) angeordnet sind.

7. Handgeführtes Arbeitsgerät nach einem der vorstehenden Ansprüche, wobei
- die Griffvorrichtung (7) als Griffbügel ausgebildet ist, und/oder
- die Griffvorrichtung (7) drehbar an dem Deichselabschnitt (6) angeordnet ist, und/oder
- durch ein Drehen der Griffvorrichtung (7) eine Geschwindigkeit und/oder eine Bewegungsrichtung der Arbeitsvorrichtung (1) wählbar ist.

8. Handgeführtes Arbeitsgerät nach einem der vorstehenden Ansprüche, wobei
- das Arbeitsgerät eine Vibrationsplatte, eine Verdichtungswalze oder ein Mähgerät ist.

9. Handgeführtes Arbeitsgerät nach einem der vorstehenden Ansprüche, wobei
- wenigstens zwei Vibrationsentkopplungselemente (9a) entlang der Verwindungsachse (10) angeordnet sind, und
- der Abstand der entlang der Verwindungsachse (10) angeordneten Vibrationsentkopplungselemente (9a) in einem Bereich von 20 % bis 40 % der wirksamen Deichsellänge liegt, wobei die wirksame Deichsellänge die Länge zwischen der Kopplung der Deichselvorrichtung an der Arbeitsvorrichtung (1) und der Kopplung der Griffvorrichtung (7) an der Deichselvorrichtung ist.

## Claims

1. Hand-guided working device, comprising
- a working apparatus (1); and
- a drawbar apparatus coupled to the working apparatus (1) for guiding the working apparatus (1), comprising
+ a drawbar portion (6) which is coupled to the working apparatus (1) by means of a vibration decoupling apparatus (9), wherein the vibration decoupling apparatus (9) establishes an elastic connection between the working apparatus (1) and the drawbar portion (6); and
+ a grip apparatus (7) which is arranged on the drawbar portion (6) and has a first grip region (7a) and a second grip region (7b), wherein the first grip region (7a) and the second grip region (7b) are arranged such that a twist axis (10) of the drawbar portion (6), which is determined by the vibration decoupling apparatus (9) by reason of the elastic connection, extends relative to the working apparatus (1) substantially centrally between the first grip region (7a) and the second grip region (7b);
wherein
- the drawbar portion (6) has an elongate extension,
- the twist axis (10) extends longitudinally with respect to the drawbar portion (6),
- the grip regions (7a, 7b) are arranged laterally adjacent the twist axis (10);
- the drawbar portion (6) has a first longitudinal portion (11) which is arranged on the vibration decoupling apparatus (9) and a second longitudinal portion (12) which is arranged on an end of the first longitudinal portion (11) opposite the vibration decoupling apparatus (9) and on which the grip apparatus (7) is arranged;
**characterised in that**
- the second longitudinal portion (12) extends in a downwardly bent manner relative to the first longitudinal portion (11), in relation to a use position of the drawbar apparatus.

2. Hand-guided working device as claimed in claim 1, wherein
an angle between a central axis of the first longitudinal portion (11) and a central axis of the second longitudinal portion (12) is less than or equal to 170°.

3. Hand-guided working device, comprising
- a working apparatus (1); and
- a drawbar apparatus coupled to the working apparatus (1) for guiding the working apparatus (1), comprising
+ a drawbar portion (6) which is coupled to the working apparatus (1) by means of a vibration decoupling apparatus (9), wherein the vibration decoupling apparatus (9) establishes an elastic connection between the working apparatus (1) and the drawbar portion (6); and
+ a grip apparatus (7) which is arranged on the drawbar portion (6) and has a first grip region (7a) and a second grip region (7b), wherein the first grip region (7a) and the second grip region (7b) are arranged such that a twist axis (10) of the drawbar portion (6), which is determined by the vibration decoupling apparatus (9) by reason of the elastic connection, extends relative to the working apparatus (1) substantially centrally between the first grip region (7a) and the second grip region (7b);
wherein
- the drawbar portion (6) has an elongate extension,
- the twist axis (10) extends longitudinally with respect to the drawbar portion (6),
- the grip regions (7a, 7b) are arranged laterally adjacent the twist axis (10);
- the drawbar portion (6) has a first longitudinal portion (11) which is arranged on the vibration decoupling apparatus (9) and a second longitudinal portion (12) which is arranged on an end of the first longitudinal portion (11) opposite the vibration decoupling apparatus (9) and on which the grip apparatus (7) is arranged;
**characterised in that**
- the second longitudinal portion (12) extends in an axially offset manner relative to the first longitudinal portion (11).

4. Hand-guided working device as claimed in claim 3, wherein
- an axial offset of the second longitudinal portion (12) relative to the first longitudinal portion (11) compensates substantially for an offset of the first grip region (7a) and of the second grip region (7b) relative to an arrangement region (8) of the grip apparatus (7), in which the grip apparatus (7) is coupled to the second longitudinal portion (12), such that the first grip region (7a) and the second grip region (7b) are arranged laterally adjacent the twist axis (10).

5. Hand-guided working device, comprising
- a working apparatus (1); and
- a drawbar apparatus coupled to the working apparatus (1) for guiding the working apparatus (1), comprising
+ a drawbar portion (6) which is coupled to the working apparatus (1) by means of a vibration decoupling apparatus (9), wherein the vibration decoupling apparatus (9) establishes an elastic connection between the working apparatus (1) and the drawbar portion (6); and
+ a grip apparatus (7) which is arranged on the drawbar portion (6) and has a first grip region (7a) and a second grip region (7b), wherein the first grip region (7a) and the second grip region (7b) are arranged such that a twist axis (10) of the drawbar portion (6), which is determined by the vibration decoupling apparatus (9) by reason of the elastic connection, extends relative to the working apparatus (1) substantially centrally between the first grip region (7a) and the second grip region (7b);
wherein
- the drawbar portion (6) has an elongate extension,
- the twist axis (10) extends longitudinally with respect to the drawbar portion (6),
- the grip regions (7a, 7b) are arranged laterally adjacent the twist axis (10);
**characterised in that**
- the vibration decoupling apparatus (9) is configured and/or arranged such that the twist axis (10) does not extend in parallel with a longitudinal axis of the drawbar portion (6).

6. Hand-guided working device as claimed in any one of the preceding claims, wherein
- the vibration decoupling apparatus (9) has at least two vibration decoupling elements (9a), wherein the vibration decoupling elements (9a) are arranged at different points along the twist axis (10).

7. Hand-guided working device as claimed in any one of the preceding claims, wherein
- the grip apparatus (7) is formed as a handle, and/or
- the grip apparatus (7) is arranged so as to be able to rotate on the drawbar portion (6), and/or
- a speed and/or a movement direction of the working apparatus (1) can be selected by rotating the grip apparatus (7).

8. Hand-guided working device as claimed in any one of the preceding claims, wherein
- the working device is a vibration plate, a compaction roller or a mowing device.

9. Hand-guided working device as claimed in any one of the preceding claims, wherein
- at least two vibration decoupling elements (9a) are arranged along the twist axis (10), and
- the spacing between the vibration decoupling elements (9a) arranged along the twist axis (10) is in a range of 20% to 40% of the effective drawbar length, wherein the effective drawbar length is the length between the coupling of the drawbar apparatus on the working apparatus (1) and the coupling of the grip apparatus (7) on the drawbar apparatus.

## Revendications

1. Engin de travail guidé manuellement avec :
- un dispositif de travail (1) ; et
- un dispositif de barre de traction, couplé avec le dispositif de travail, pour le guidage du dispositif de travail (1), avec
+ une portion de barre de traction (6) couplée avec le dispositif de travail (1) à l'aide d'un dispositif de découplage de vibrations (9), le dispositif de découplage de vibrations (9) permettant une liaison élastique entre le dispositif de travail (1) et la portion de barre de traction (6) ; et
+ un dispositif de préhension (7) disposé sur la portion de barre de traction (6), avec une première zone de préhension (7a) et une deuxième zone de préhension (7b), la première zone de préhension (7a) et la deuxième zone de préhension (7b) étant disposées de façon à ce qu'un axe de torsion (10), généré par le dispositif de découplage de vibrations (9) du fait de la liaison élastique, de la portion de barre de traction (6) s'étende globalement de manière centrale par rapport au dispositif de travail (1) entre la première zone de préhension (7a) et la deuxième zone de préhension (7b) ;
- la portion de barre de traction (6) présentant une extension allongée,
- l'axe de torsion (10) s'étendant le long de la portion de barre de traction (6),
- les zones de préhension (7a, 7b) étant disposées latéralement à côté de l'axe de torsion (10) ;
- la portion de barre de traction (6) comprenant une première portion longitudinale (11), disposée sur le dispositif de découplage des vibrations (9) et une deuxième portion longitudinale (12), disposée sur une extrémité de la première portion longitudinale (11) opposée au dispositif de découplage des vibrations (9), sur laquelle est disposée le dispositif de préhension (7) ; **caractérisé en ce que**
- la deuxième portion longitudinale (12) s'étend, par rapport à la première portion longitudinale (11), dans une position d'utilisation du dispositif de barre de traction, de manière pliée vers le bas.

2. Engin de travail guidé manuellement selon la revendication 1,
un angle entre un axe central de la première portion longitudinale (11) et un axe central de la deuxième portion longitudinale (12) étant inférieur ou égal à 170°.

3. Engin de travail guidé manuellement avec :
- un dispositif de travail (1) ; et
- un dispositif de barre de traction, couplé avec le dispositif de travail (1), pour le guidage du dispositif de travail (1), avec
+ une portion de barre de traction (6) couplée avec le dispositif de travail (1) à l'aide d'un dispositif de découplage de vibrations (9), le dispositif de découplage de vibrations (9) permettant une liaison élastique entre le dispositif de travail (1) et la portion de barre de traction (6) ; et
+ un dispositif de préhension (7) disposé sur la portion de barre de traction (6), avec une première zone de préhension (7a) et une deuxième zone de préhension (7b), la première zone de préhension (7a) et la deuxième zone de préhension (7b) étant disposées de façon à ce qu'un axe de torsion (10), généré par le dispositif de découplage de vibrations (9) du fait de la liaison élastique, de la portion de barre de traction (6) s'étende globalement de manière centrale par rapport au dispositif de travail (1) entre la première zone de préhension (7a) et la deuxième zone de préhension (7b) ;
- la portion de barre de traction (6) présentant une extension allongée,
- l'axe de torsion (10) s'étendant le long de la portion de barre de traction (6),
- les zones de préhension (7a, 7b) étant disposées latéralement à côté de l'axe de torsion (10) ;
- la portion de barre de traction (6) comprenant une première portion longitudinale (11), disposée sur le dispositif de découplage des vibrations (9) et une deuxième portion longitudinale (12), disposée sur une extrémité de la première portion longitudinale (11) opposée au dispositif de découplage des vibrations (9), sur laquelle est disposée le dispositif de préhension (7) ; **caractérisé en ce que**
- la deuxième portion longitudinale (12) s'étend de manière décalée axialement par rapport à la première portion longitudinale (11).

4. Engin de travail guidé manuellement selon la revendication 3,
- un décalage axial de la deuxième portion longitudinale (12) par rapport à la première portion longitudinale (11) compensant globalement un décalage de la première zone de préhension (7a) et de la deuxième zone de préhension (7b) par rapport à une zone de disposition (8) du dispositif de préhension (7), dans laquelle le dispositif de préhension (7) est couplée avec la deuxième portion longitudinale (12), de façon à ce que la première zone de préhension (7a) et la deuxième zone de préhension (7b) soient disposées latéralement à côté de l'axe de torsion (10).

5. Engin de travail guidé manuellement avec :
- un dispositif de travail (1) ; et
- un dispositif de barre de traction, couplé avec le dispositif de travail (1), pour le guidage du dispositif de travail (1), avec
+ une portion de barre de traction (6) couplée avec le dispositif de travail (1) à l'aide d'un dispositif de découplage de vibrations (9), le dispositif de découplage de vibrations (9) permettant une liaison élastique entre le dispositif de travail (1) et la portion de barre de traction (6) ; et
+ un dispositif de préhension (7) disposé sur la portion de barre de traction (6), avec une première zone de préhension (7a) et une deuxième zone de préhension (7b), la première zone de préhension (7a) et la deuxième zone de préhension (7b) étant disposées de façon à ce qu'un axe de torsion (10), généré par le dispositif de découplage de vibrations (9) du fait de la liaison élastique, de la portion de barre de traction (6) s'étende globalement de manière centrale par rapport au dispositif de travail (1) entre la première zone de préhension (7a) et la deuxième zone de préhension (7b) ;
- la portion de barre de traction (6) présentant une extension allongée,
- l'axe de torsion (10) s'étendant le long de la portion de barre de traction (6),
- les zones de préhension (7a, 7b) étant disposées latéralement à côté de l'axe de torsion (10) ;
**caractérisé en ce que**
- le dispositif de découplage des vibrations (9) est conçu et/ou disposé de façon à ce que l'axe de torsion (10) ne s'étende pas parallèlement à un axe longitudinal de la portion de barre de traction (6).

6. Engin de travail guidé manuellement selon l'une des revendications précédentes,
- le dispositif de découplage des vibrations (9) comprenant au moins deux éléments de découplage des vibrations (9a), les éléments de découplage des vibrations (9a) étant disposés à différents points le long de l'axe de torsion (10).

7. Engin de travail guidé manuellement selon l'une des revendications précédentes,
- le dispositif de préhension (7) étant conçu comme un étrier de préhension et/ou
- le dispositif de préhension (7) étant disposé de manière rotative sur la portion de barre de traction (6) et/ou
- une rotation du dispositif de préhension (7) permettant de sélectionner une vitesse et/ou un sens de déplacement du dispositif de travail (1).

8. Engin de travail guidé manuellement selon l'une des revendications précédentes,
- l'engin de travail étant une plaque vibrante, un rouleau de compactage ou un engin de fauchage.

9. Engin de travail guidé manuellement selon l'une des revendications précédentes,
- au moins deux éléments de découplage des vibrations (9a) étant disposés le long de l'axe de torsion (10) et
- la distance entre les éléments de découplage des vibrations (9a) disposés le long le de l'axe de torsion (10) est de l'ordre de 20 % à 40 % de la longueur efficace de la barre de traction, la longueur efficace de la barre de traction étant la longueur entre le couplage du dispositif de barre de traction au dispositif de travail (1) et le couplage du dispositif de préhension (7) au dispositif de barre de traction.
